Europäisches Patentamt

European Patent Office

Office européen des brevets

(11) Publication number: **0 373 094**
**A2**

## EUROPEAN PATENT APPLICATION

(21) Application number: **89630213.0**

(22) Date of filing: **07.12.89**

(51) Int. Cl.⁵: **B60C 1/00, B60C 11/14**

(30) Priority: **08.12.88 US 281371**

(43) Date of publication of application:
**13.06.90 Bulletin 90/24**

(84) Designated Contracting States:
**DE ES FR GB IT**

(71) Applicant: **THE GOODYEAR TIRE & RUBBER COMPANY**
**1144 East Market Street**
**Akron, Ohio 44316-0001(US)**

(72) Inventor: **Orjela, Gurdev**
**2458 Amesbury Road**
**Akron Ohio 44313(US)**
Inventor: **Apticar, Samson Samuel**
**4166 Sunnyview Drive**
**Uniontown Ohio 44685(US)**

(74) Representative: **Weyland, J.J. Pierre**
**Goodyear Technical Center-Luxembourg**
**L-7750 Colmar-Berg(LU)**

(54) Tire tread containing fibrillated fibers.

㉗ The tread portion (25) of a tire (20) comprises a rubber matrix containing 0.5 to 5 phr of short fibrillated fibers dispersed therein. Preferably, the fibrillated fibers are aromatic polyamides or liquid crystalline fibers. The tire tread has a plurality of grooves (26) therein which define traction elements (27) having radially outermost surfaces (28), and in a footprint of the tire the radially outermost surfaces (28) of the traction elements (27) present an average of at least 1.4 cm of perimeter length for each square centimeter of total footprint area.

FIG.2

EP 0 373 094 A2

## TIRE TREAD CONTAINING FIBRILLATED FIBERS

The present invention relates to a tire having a tread portion which comprises a fibrillated material embedded in an elastomeric compound.

It is an accepted practice in the tire industry to have tire treads comprise an elastomeric compound of natural and/or synthetic rubbers containing reinforcing fillers such as carbon black and silica to enhance the physical properties of the compound. It is also known to embed metallic or nonmetallic fibers in tire tread compounds. The present invention provides tire treads comprising compounds containing short fibrillated fibers in combination with particular structural features of the tread design.

The present invention will be better understood by referring to the figures of the drawing, wherein:

Fig. 1 is a greatly magnified view of a short fibrillated fiber of the type employed in the practice of the present invention;

Fig. 2 is a cross-sectional view of a tire;

Fig. 3 is a fragmentary plan view of an example of a tread of a tire according to the invention;

Fig. 4 is a representation of a footprint of a tire having the tread design illustrated in Fig. 3;

Fig. 5 is a fragmentary view of another example of a tread of a tire according to the invention;

Fig. 6 is a representation of a footprint of a tire having the tread design illustrated in Fig. 5;

Fig. 7 is an enlarged schematic representation of the cross-sectional structure of one of the traction elements of the tread illustrated in Fig. 5; and

Fig. 8 is a graph showing the length population distribution of fibrillated fibers used in the working examples of the invention described herein.

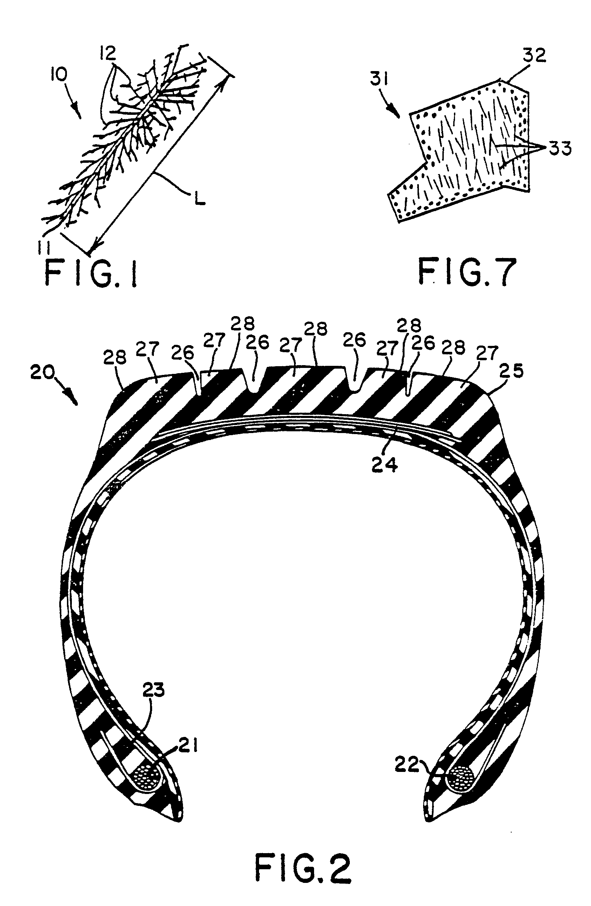

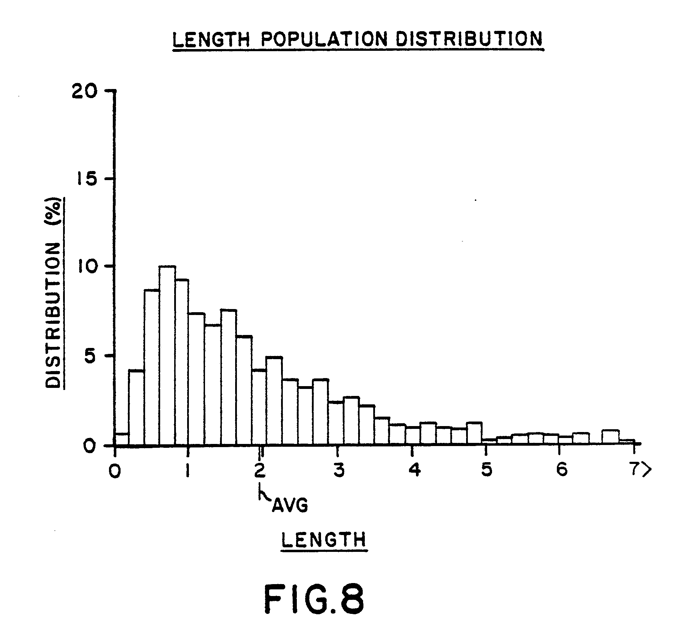

In accordance with the present invention the ground contacting tread portion of a tire comprises an elastomeric matrix material which has short fibrillated fibers embedded therein. As illustrated in a greatly magnified manner in Fig. 1, a fibrillated fiber 10 comprises a trunk portion 11 with a plurality of fibrils 12 extending outwardly from the trunk portion and having diameters substantially smaller than the diameter of the trunk from which they extend. It is preferred that fibrillated fibers used in the practice of this invention have overall lengths L of less than 8 mm, preferably in the range of 1 to 7 mm, and an average length in the range of about 2 to 4 mm. For example, the length distribution of the fibrillated aramid fibers used in the working example which will be presented later in this specification is illustrated in Fig. 8.

While the applicants believe that any fibrillated material which will adequately adhere to the elastomeric matrix of a tire tread may be used in the practice of the invention, it is preferred that the fibrillated fibers used in the tread of a tire according to the invention comprise at least one material selected from the group consisting of aromatic polyamides and liquid crystalline fibers.

As used herein and in the claims an "aromatic polyamide", also commonly referred to simply as an "aramid", is understood to mean a manufactured fiber in which the fiber forming substance is generally recognized as a long chain synthetic aromatic polyamide in which at least 85% of the amide linkages are attached directly to two or more aromatic rings. Representative of an aromatic polyamide is a poly (p-phenyleneterephthalamide).

Short, discontinuous fibrillated aramid fibers having the required characteristics for use in this invention are commercially available from E. I. Dupont de Nemours & Co., Wilmington, Delaware, U.S.A., as a pulp under the trade name "Kevlar 29"TM. This material is in the form of extremely short fibrillated fibers having an average length of about 2 mm, a trunk diameter of 12 micrometers and a large number of fibrils having diameters less than one micrometer extending outwardly from the trunk. These fibers have a surface area of 8 to 10 square meters per gram, which is 40 to 50 times that of rods of nonfibrillated fibers having a diameter of 12 micrometers. Fibrillation (ie., the presence of fibrils) is responsible for this increase in surface area.

Aramid in any of its various physical forms is essentially inextensible, as exhibited by its high tensile modulus and low elongation at break. Modulus and elongation data are given in U.S. Patent 4,155,394. While values vary depending upon grade (e.g., "Kevlar"TM, "Kevlar 29 "TM, or "Kevlar 49"TM), physical form (e.g., yarn, chopped fiber, etc.) and presence or absence of impregnant.

As used herein, a "liquid crystal polymer" is a material which is birefringent and exhibits interference patterns in polarized light, said behavior resulting from the orientation of molecules parallel to each other in large clusters. Examples of liquid crystal polymers are polyesters, and a commercially available example is "Vectra "TM sold by Hoechst Celanese Corporation, Charlotte, North Carolina, U. S. A.

The elastomeric compounds used in the tire treads of the working examples which will be described herein were mixed using a #11 Banbury (2 paddle, 30 rpm) according to the formulation and process set forth below in Table I. All quantities of ingredients are in units of parts by weight, based on 100 parts of elastomer (i.e., synthetic and natural rubber).

## TABLE I

## MIXING OF TREAD COMPOUNDS

| Ingredients | Stage 1 | Stage 2 | Stage 3 | Stage 4 |
|---|---|---|---|---|
| Synthetic Rubber | 60 | | | |
| Natural Rubber | 15 | 25 | | |
| HAF Black | 35 | | | |
| Silica | | 15 | | |
| Plasticizers | 8.5 | | | |
| Antidegradants | 3 | | | |
| Zinc Oxide | 3.5 | | | |
| *Aramid Masterbatch | 5.0 | | REMILL | |
| Accelerators | | | | 1.1 |
| Sulfur | | | | 2 |
| | | | | |
| Plasticizers at | 200°F | | | |
| Ram raise at | 280°F | | | |
| Discharge at | 345°F | 300°F | 300°F | 220°F |

*Aramid pulp masterbatch used in the working examples
comprised 50% pulp; 38% natural rubber and 12% zinc oxide.

It is understood that other formulations may be employed in practicing the invention. For example, an aramid pulp masterbatch comprising 44.4% aramid pulp, 44.4% N326 carbon black and 11.2% isoprene, as taught in U.S. Patent 4,514,541 may be substituted for the masterbatch used in the working examples. It is believed that in general an elastomeric composition used in the tread portion of a tire according to the invention should comprise prior to vulcanization 100 parts by weight of an elastomeric matrix material comprising at least one material selected from the group consisting of natural and synthetic rubbers, 20 to 150 phr of reinforcing filler comprising at least one material selected from the group consisting of carbon blacks and silicas, 5 to 100 phr plasticizer, a vulcanizing amount of a cure package, and 0.5 to 5 phr, preferably 0.5 to 3 phr of short fibrillated fibers dispersed therein. Moreover, it is preferred that the vulcanized composition have a Shore A hardness in the range of 58 to 70, a tensile strength in the range of 15 to 17 Mpa as determined by ASTM D412, a static modulus at 100% elongation in the range of 1.8 to 4.5 Mpa as determined by ASTM D412, and a Healey rebound in the range of 40 to 85 as determined by ASTM D1054.

Referring to Fig. 2, there is shown by way of example a cross-sectional view of a typical radial ply pneumatic tire 20. Such a tire comprises a pair of annular beads 21,22 with at least one carcass ply 23 extending between the beads and anchored thereabout. A belt package 24 is disposed in a crown area of the tire radially outwardly of the carcass ply, and a tread portion 25 is disposed radially outwardly of the belt package. The tread portion 25 has a plurality of grooves 26 therein which define traction elements 27 having radially outermost surfaces 28. As used herein and in the claims, "radially" refers to directions perpendicular to a tire's axis of rotation, such that "radially outwardly" and "radially outermost" relate to directions away from the axis of rotation, and "radially inwardly" relates to directions towards the axis of rotation. However, it is believed that the practice of the present invention is not limited to any particular tire construction, but rather is best suited to tires having particular structural features in their tread portions.

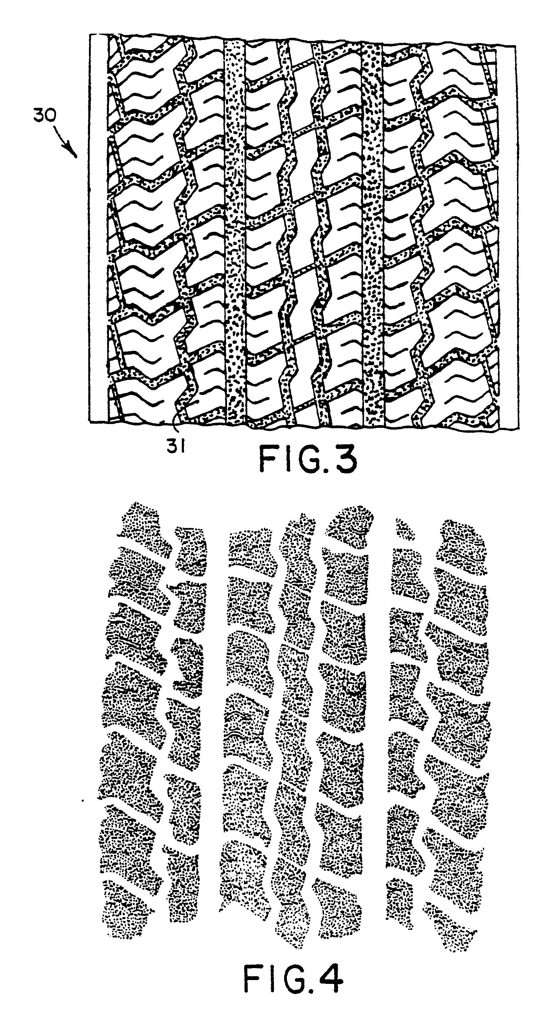

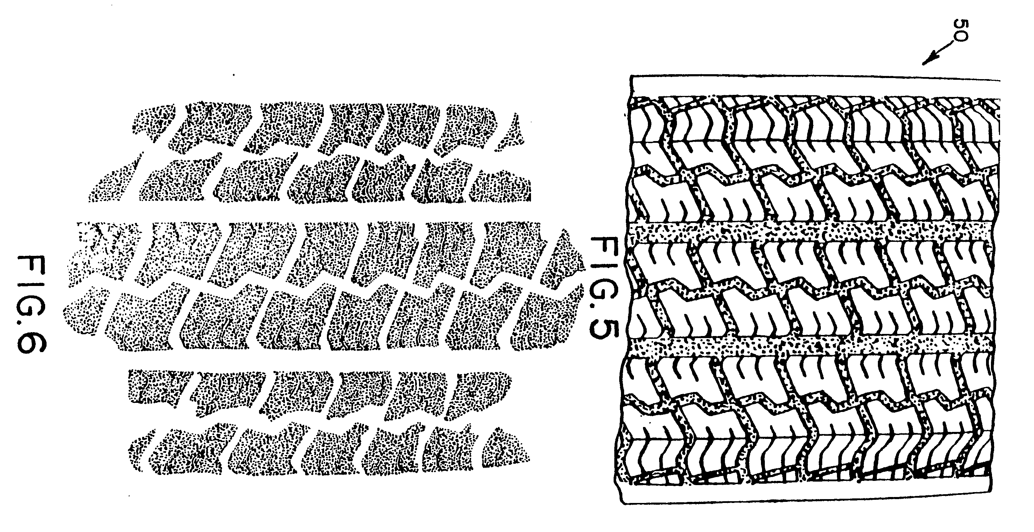

Figs. 3 and 5 are fragmentary plan views of the tread portions 30,50 of the tires employed as working examples of the present invention. Both of these tread structures 30,50 are described in commonly owned U.S.A. Patent Application 146,658 which was filed on January 21, 1988. Tires having the tread structure 30 illustrated in Fig. 3, but without fibrillated short fibers embedded in the tread portion, are currently marketed by The Goodyear Tire & Rubber Company, of Akron, Ohio, U.S.A. under the product designation of "INVICTA GA". Tires having the tread structure 50 illustrated in Fig. 5, but without fibrillated short fibers embedded in the tread portion, are currently marketed by The Goodyear Tire & Rubber Company, of Akron, Ohio, U.S.A. under the product designation of "INVICTA GL". In each instance, the working examples were identical to regular production tires with the exception that the tread portions comprised the elastomeric compound set forth herein in Table I.

Fig. 4 is a representation of an actual footprint of a working example of a tire size P175/65R14 according to the invention having the tread structure 30 illustrated in Fig. 3 inflated to 193 kPa (28 psi) and subjected to a load of 415 kg (914 pounds). Fig. 6 is a representation of an actual footprint of a working example of a tire size P175/70R13 according to the invention having the tread structure 50 illustrated in Fig. 5 inflated to 179 kPa (26 psi) and subjected to a load of 406 kg (893 pounds). As used herein and in the claims, a "footprint" of a tire refers to a static footprint of a tire that has been mounted upon its specified rim, inflated to its specified inflation pressure and subjected to its rated load for said inflation pressure. The specified rim, inflation pressure, and rated load at the specified inflation pressure for a tire may be determined from information affixed to the tire sidewall, or from the manufacturer of the tire, or from an organization which publishes industry standards (e.g., The Tire & Rim Association or the European Tyre & Rim Technical Organization).

When the tires of the working examples according to the invention and the regular production tires were subjected to comparative tests, it was determined that the tires according to the invention had (a) treads with an increased static/dynamic modulus of elasticity at low strain levels, resulting in better handling characteristics (e.g., higher cornering coefficient); (b) more uniform treadwear; and (c) improved chipping and chunking characteristics of the tread. The rolling resistance performance of the tires was substantially identical in both the regular production tires and the tires of the working examples. It is an undesirable characteristic of the tires of the working examples that the overall treadwear of the tires was less than that of the regular production tires. Therefore, it would be appropriate to employ the invention in tires when improvements in treadwear uniformity and handling characteristics are desired, but the overall treadwear performance has been more than satisfactory.

In an effort to determine why the tires of the working examples exhibited the characteristics discussed above, the tread portions of said tires were subjected to microscopic examination. Fig. 7 is a schematic representation of what was observed in a cross section of a single traction element 31 of a tread portion 30 of a working example having the tread structure illustrated in Fig. 3 with the observer looking radially inwardly towards the tire. The short fibrillated fibers 32 located near the perimeter of the traction element were oriented substantially perpendicular to the tire's axis of rotation, while the fibrillated fibers 33 located away from the perimeter of the traction element were disposed in a partially oriented manner running in a circumferential direction. It is theorized that when the elastomeric tread compound is extruded, in a known manner, to produce an unvulcanized tread for assembly with a tire carcass, the short fibrillated fibers orient somewhat in the longitudinal direction of the extrudate. When the tire tread is forced against a mold matrix during vulcanization the fibrillated fibers near the perimeters of the traction elements become oriented perpendicular to the radially outermost surfaces of the traction elements.

It is apparent then that at least a portion of the desirable characteristics exhibited by the working examples is attributable to the orientation of the fibrillated fibers near the edges of the traction elements. It is, therefore, believed that the degree of advantage to be obtained by the present invention is a function of the linear dimensions of traction element perimeters existing in a footprint of a tire. While the exact lower limit of this parameter is not readily ascertainable, it is clear that tires according to the working examples benefited from the presence of the short fibrillated fibers in their tread portions. The tire according to the

4

working embodiment shown in Fig. 3, with the footprint illustrated in Fig. 4, had a total footprint area of about 212 square centimeters (32.9 square inches) and the sum of the linear dimensions of the perimeters of the radially outer surfaces of the traction elements in the footprint was about 306 cm (120.4 inches), or put another way, an average of about 1.4 cm of traction element perimeter length for each square centimeter of total footprint area. The tire according to the working embodiment shown in Fig. 5, with the footprint illustrated in Fig. 6, had a total footprint area of about 200 square centimeters (31 square inches) and the sum of the linear dimensions of the perimeters of the radially outer surfaces of the traction elements as measured in the footprint was about 288 cm (113.5 inches), or put another way an average of about 1.4 cm of traction element perimeter length for each square centimeter of total footprint area.

It is also believed that the degree of concentration of fibrillated fibers in the tread compound is critical because too high of concentrations will result in compounds that cannot be processed using conventional tire manufacturing equipment or could result in very fast wearing treads because the elastomeric matrix would be far too broken up by the fibrillated fibers. The tread portion of a tire according to the invention contains 0.5 to 5 phr, preferably 0.5 to 3 phr, of short fibrillated fibers.

While certain representative embodiments and details have been shown for the purpose of illustrating the invention, it will be apparent to those skilled in the art that various changes and modifications may be made therein without departing from the spirit or scope of the invention.

## Claims

1. A tire (20) characterized by a tread portion (25) comprising an elastomeric composition which prior to vulcanization comprises 100 parts by weight of an elastomeric matrix material comprising at least one material selected from the group consisting of natural and synthetic rubbers, 20 to 150 phr of reinforcing filler comprising at least one material selected from the group consisting of carbon blacks and silicas, 5 to 100 phr plasticizer, and a vulcanizing amount of a cure package, said elastomeric composition having 0.5 to 5 phr of short fibrillated fibers (10) dispersed therein, said fibrillated fibers having lengths (L) of less than 8 mm and an average length in the range of about 2 to 4 mm, said tread portion (25) having a plurality of grooves (26) therein which define traction elements (27) having radially outermost surfaces (28) and in a footprint of the tire the radially outermost surfaces of the traction elements present an average of at least 1.4 cm of perimeter length for each square centimeter of total footprint area.

2. A tire (20) as claimed in claim 1 characterized by said vulcanized elastomeric composition prior to vulcanization comprising:

(a) 100 parts of an elastomeric matrix material comprising 30 to 50 parts of natural rubber and 50 to 70 parts of synthetic rubber;

(b) 30 to 40 phr carbon black;

(c) 10 to 20 phr silica;

(d) 1 to 5 phr zinc oxide;

(e) 7 to 10 phr plasticizers;

(f) 0.2 to 6 phr antidegradants;

(g) a vulcanizing amount of a sulfur cure package; and

(h) 0.5 to 3 phr of said fibrillated aramid fibers.

3. A tire (20) as claimed in any of the preceding claims characterized by said elastomeric composition having a Shore A hardness in the range of 58 to 70, a tensile strength in the range of 15 to 17 Mpa as determined by ASTM D412, a static modulus at 100% elongation in the range of 1.8 to 4.5 Mpa as determined by ASTM D412, and a Healey rebound in the range of 40 to 85 as determined by ASTM D1054.

4. A tire (20) as claimed in any of the preceding claims characterized by said fibrillated fibers comprising at least one material selected from the group consisting of aromatic polyamides and liquid crystalline fibers.

FIG.1

FIG.7

FIG.2

FIG.3

FIG.4

50

FIG.5

FIG.6

LENGTH POPULATION DISTRIBUTION

FIG.8